# EUROPEAN PATENT SPECIFICATION

(11) **EP 3 226 090 B1**
(45) Date of publication and mention of the grant of the patent: **16.10.2019**
(21) Application number: 14906671.4
(22) Date of filing: 26.11.2014
(51) Int. Cl.: G05B 19/418, G06K 9/00, G06K 9/46, G06K 9/62

(54) **OPERATION SUPPORT SYSTEM, OPERATION SUPPORT DEVICE AND OPERATION SUPPORT METHOD**
BETRIEBSUNTERSTÜTZUNGSSYSTEM, BETRIEBSUNTERSTÜTZUNGSVORRICHTUNG UND BETRIEBSUNTERSTÜTZUNGSVERFAHREN
SYSTÈME, DISPOSITIF ET PROCÉDÉ D'ASSISTANCE À L'EXPLOITATION

(43) Date of publication of application: 04.10.2017
(73) Proprietor: Mitsubishi Electric Engineering Company, Limited, Chiyoda-ku Tokyo 102-0073 (JP)
(72) Inventor: HAYASHIDA, Takashi, Tokyo 102-0073 (JP); MATSUSHITA, Hironobu, Tokyo 102-0073 (JP); SHIMIZU, Takaki, Tokyo 102-0073 (JP); KATAYAMA, Atsushi, Tokyo 102-0073 (JP)
(74) Representative: Hoffmann Eitle
(86) International application number: PCT/JP2014/081196
(87) International publication number: WO 2016/084151

(56) References cited:
- EP-A2- 2 738 516
- WO-A1-2004/070485
- JP-A- 2004 184 095
- JP-A- 2005 322 055
- JP-A- 2006 513 509
- JP-A- 2011 175 600
- JP-A- 2013 250 479
- JP-A- 2013 250 479

## Description

### TECHNICAL FIELD

The present invention relates to an operation supporting system for, an operation supporting device for, and an operation supporting method of supporting operations which an operator performs for a product.

### BACKGROUND ART

Conventionally, when performing an assembling operation or the like for a product, an operator performs the operation by using a document such as an operation manual or a check list. However, in this case, it is necessary to prepare a place where the document is provided for each product. Further, the operator needs to open the document to the corresponding page, and this arises a problem that the document becomes dirty. There is also a possibility that the document becomes lost.

Further, a device that, in order to support an operator who performs an assembling operation or the like for a product, displays a description of the operation on a monitor is known (for example, refer to patent literature 1). The operator performs the assembling operation in accordance with the description of the operation displayed on the monitor, and, after completing the operation, pushes an operation completion switch. As a result, the device determines that the assembling operation in accordance with the description of the operation is completed normally, and then shifts to display of a description of the next operation.

### CITATION LIST

### PATENT LITERATURE

Patent Literature 1: Japanese Unexamined Patent Application Publication No. 2010-61566
Patent Literature 2: Japanese Unexamined Patent Application Publication No. 2013-230547

### SUMMARY OF INVENTION

### TECHNICAL PROBLEM

However, because in the conventional configuration disclosed in Patent Literature 1, descriptions of operations are displayed on the monitor installed at a location different from that of the product (e.g., behind the product), there is a possibility that the operator mistakenly recognizes the description of an operation, or forgets the description of an operation. Further, there is a possibility that an operator familiar to operations performs an assembling operation without checking the description of the operation displayed on the monitor, and then pushes an operation completion switch. A problem is that there is a possibility that, as a result, operation errors occur.

Patent Literature 2 discloses a device that irradiates a laser beam directly to a product, thereby showing the installation positions of its parts. However, because the device disclosed in Patent Literature 2 is based on the premise that the installation position of the product is fixed, when the installation position of the product on which operations are performed changes every time the product is installed, the device cannot respond to the change. EP2738516 A2 and WO2004/070485 A1 relate to augmented reality in an operational environment.

The present invention is made in order to solve the above-mentioned problems, and it is therefore an object of the present invention to provide an operation supporting device and an operation supporting method capable of reducing operation errors, as compared with conventional configurations, even when the installation position of a product on which an operator performs operations changes.

### SOLUTION TO PROBLEM

According to the present invention, there is provided an operation supporting device including: a feature image registering unit for registering feature images of three or more parts of a product, with which said product is recognizable, together with a positional relationship among the parts; a support information registering unit for registering a display position of the operation support information for the product; an image acquiring unit for acquiring an image captured by an image capturing device; a position determining unit for comparing the captured image acquired by the image acquiring unit and the feature images in accordance with the information registered in the feature image registering unit, and determining the position of the product in the captured image from a positional relationship among the parts recognized in the captured image; a projection position calculating unit for calculating a projection position of the operation support information from both the position of the product which is determined by the position determining unit and the display position of the operation support information which is registered in the support information registering unit; a projection image generating unit for generating a projection image in which the operation support information is disposed at the projection position calculated by the projection position calculating unit; and a projection image outputting unit for outputting the projection image generated by the projection image generating unit to a projector.

Further, the above mentioned operation supporting method includes the steps of: in a feature image registering unit, registering feature images of three or more parts of a product, with which said product is recognizable, together with a positional relationship among the parts; in a support information registering unit, registering a display position of the operation support information for the product; in an image acquiring unit, acquiring an image captured by an image capturing device; in a position determining unit, comparing the captured image acquired by the image acquiring unit and the feature images in accordance with the information registered in the feature image registering unit, and determining the position of the product in the captured image from a positional relationship among the parts recognized in the captured image; in a projection position calculating unit, calculating a projection position of the operation support information from both the position of the product which is determined by the position determining unit and the display position of the operation support information which is registered in the support information registering unit; in a projection image generating unit, generating a projection image in which the operation support information is disposed at the projection position calculated by the projection position calculating unit; and in a projection image outputting unit, outputting the projection image generated by the projection image generating unit to a projector.

### ADVANTAGEOUS EFFECTS OF INVENTION

Because the operation supporting device and the operation supporting method according to the present invention are configured as above, operation errors can be reduced as compared with conventional configurations, even when the installation position of a product on which an operator performs operations changes.

### BRIEF DESCRIPTION OF DRAWINGS

Fig. 1 is a diagram showing the configuration of an operation supporting system according to Embodiment 1 of the present invention;
Fig. 2 is a diagram showing the configuration of an operation supporting device according to Embodiment 1 of the present invention;
Fig. 3 is a flow chart showing the operation of the operation supporting device according to Embodiment 1 of the present invention;
Fig. 4 is a diagram showing an example of feature images registered in a feature image registering unit according to Embodiment 1 of the present invention;
Fig. 5 is a diagram showing an example of a table registered in a support information registering unit according to Embodiment 1 of the present invention;
Fig. 6 is a diagram showing an example of projection of operation support information onto a product, which is carried out by the operation supporting device according to Embodiment 1 of the present invention;
Fig. 7 is a diagram showing an example of the projection of operation support information onto the product, which is carried out by the operation supporting device according to Embodiment 1 of the present invention;
Fig. 8 is a diagram showing an example of the projection of operation support information onto the product, which is carried out by the operation supporting device according to Embodiment 1 of the present invention;
Fig. 9 is a diagram showing the configuration of an operation supporting system according to Embodiment 2 of the present invention;
Fig. 10 is a diagram showing the configuration of an operation supporting device according to Embodiment 2 of the present invention;
Fig. 11 is a diagram showing an example of a table registered in a support information registering unit according to Embodiment 2 of the present invention; and
Fig. 12 is a diagram showing a display example of a tablet terminal according to Embodiment 2 of the present invention.

### DESCRIPTION OF EMBODIMENTS

Hereafter, the preferred embodiments of the present invention will be explained in detail with reference to the drawings.

### Embodiment 1.

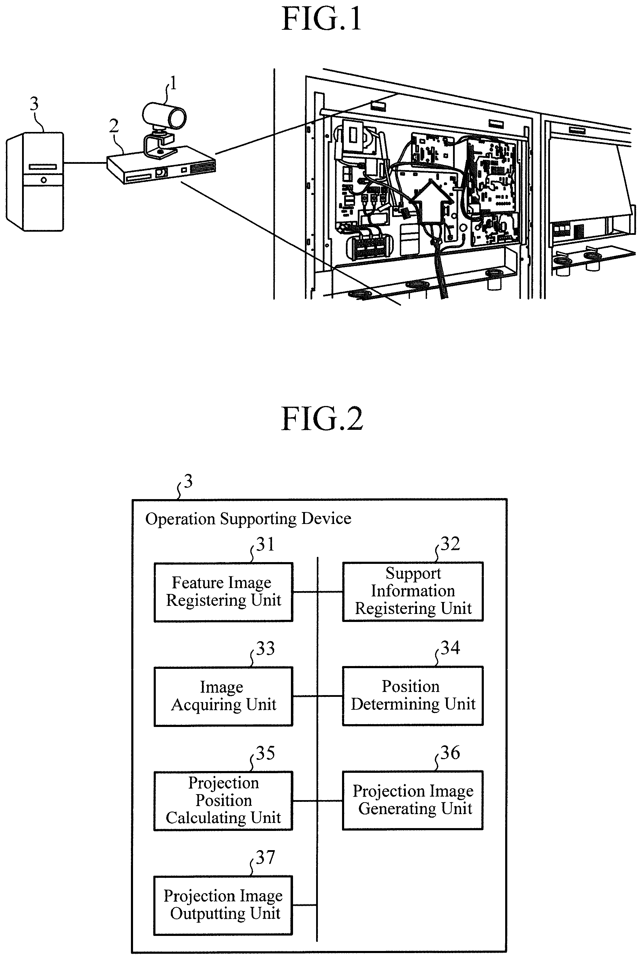

Fig. 1 is a diagram showing the configuration of an operation supporting system according to Embodiment 1 of the present invention.

The operation supporting system is comprised of an image capturing device 1, a projector 2 and an operation supporting device 3, as shown in Fig. 1.

The image capturing device 1 captures an image of a work area where an operator performs operations of a product. For example, a Web camera or the like is used as the image capturing device. This image capturing device 1 is installed at a position in such a manner that the operator is not interposed between the image capturing device 1 and the product.

The operations which the operator performs include, for example, an assembling operation of tightening screws and inserting connectors into the product, a sticking operation of sticking a sticker or the like onto the product, an applying operation of applying a coating agent to the product, a switching operation of switching off or on only a switch specified among a plurality of switches disposed in the product, and an inspecting operation of inspecting whether or not these operations have been performed normally.

The projector 2 receives a projection image including information (operation support information) for supporting an operation performed by the operator from the operation supporting device 3, and projects the projection image onto the work area. As a result, the operation support information is projected directly onto the product located in the work area. This projector 2 is installed at a position in such a manner that the operator is not interposed between the projector and the product.

General-purpose devices can be used for the image capturing device 1 and the projector 2. Further, the coordinates of the image capture area in the image capturing device 1 and the coordinates of the projection area in the projector 2 are configured in such a way that the coordinates of the image capture area and the coordinates of the projection area can be converted by the operation supporting device 3. Further, by specifying calibration values in the operation supporting device 3, the image capturing device 1 and the projector 2 can be modified discretionarily.

The operation supporting device 3 generates a projection image including operation support information on the basis of the image captured by the image capturing device 1 and outputs the projection image to the projector 2. This operation supporting device 3 is comprised of a feature image registering unit 31, a support information registering unit 32, an image acquiring unit 33, a position determining unit 34, a projection position calculating unit 35, a projection image generating unit 36, and a projection image outputting unit 37, as shown in Fig. 2. The functional units 33 to 37 of the operation supporting device 3 are implemented via program processing based on software with a CPU. Further, the registering units 31 and 32 are comprised of an HDD, a DVD, a memory, or the like.

The feature image registering unit 31 defines, for each product as mentioned above, images of three or more parts of the product as feature images, with which the product is recognizable, and registers these feature images together with a positional relationship among the parts.

The support information registering unit 32 registers, for each product as mentioned above, operation support information and a display position of the operation support information for the product. In this case, as the operation support information, for example, there is an arrow or circle pointing to a part to be operated, numerals showing the order of processes of operation, or character strings or the likes showing descriptions of processes of operation. Further, part images showing parts as if the parts are mounted at their mounting positions on the product can be used, or an animation or the like can be alternatively used. Further, part images and an animation can be combined.

The image acquiring unit 33 acquires the image captured by the image capturing device 1.

The position determining unit 34 compares the captured image acquired by the image acquiring unit 33 and the feature images on the basis of the information registered in the feature image registering unit 31, to detect the product, and determines the position of the product in the captured image from a positional relationship among the parts recognized in the captured image.

The projection position calculating unit 35 calculates the projection position of the operation support information from both the position of the product in the captured image, the position being determined by the position determining unit 34, and the display position of the corresponding operation support information for the product, the display position being registered in the support information registering unit 32.

The projection image generating unit 36 generates a projection image in which the corresponding operation support information registered in the support information registering unit 32 is disposed at the projection position calculated by the projection position calculating unit 35.

The projection image outputting unit 37 outputs the projection image generated by the projection image generating unit 36 to the projector 2.

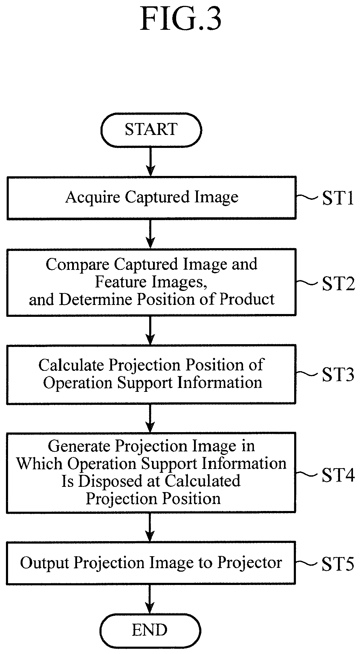

Next, the operations of the operation supporting device 3 configured as above will be explained with reference to Figs. 3 to 8.

The feature image registering unit 31 registers, for each product as mentioned above, feature images of three or more parts of the product in advance, together with a positional relationship among the parts (feature image registering step) . As these feature images, images having a uniform shape and little reflection of light, which are included in an entire image of the product, are used. Further, the size of the feature images is set in consideration of the speed of the comparison process performed by the position determining unit 34.

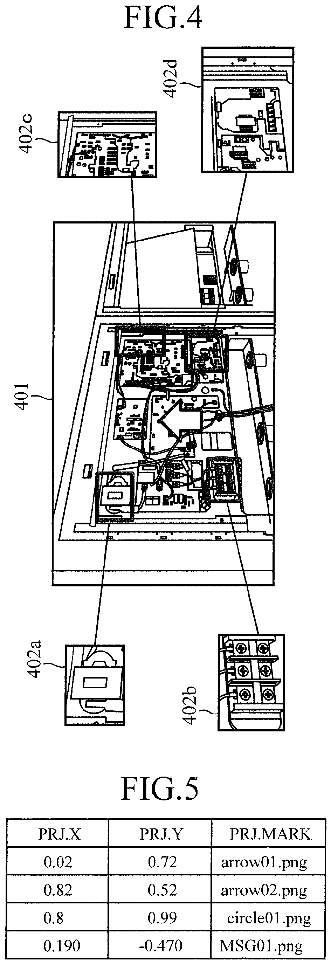

Further, the position determining unit 34 makes a comparison between each of the feature images and the captured image, and determines the position (installation angle) of the product from both a positional relationship among the feature images and a positional relationship among the parts recognized in the captured image. Therefore, it is necessary to provide, as the feature images, images of at least three parts. In an example shown in Fig. 4, images 402a to 402d of parts at four corners are cut out from an entire image 401 which is acquired by capturing the whole product, and defined as feature images.

Further, the support information registering unit 32 registers, for each product as mentioned above, both operation support information and information showing the display position of the operation support information for the product in advance (support information registering step). In the support information registering unit 32, a table as shown in, for example, Fig. 5 is set in advance and held. In the table shown in Fig. 5, X and Y coordinates (PRJ.X, PRJ.Y) on a projection coordinate system, the X and Y coordinates showing the position on which each piece of operation support information is projected by the projector 2 when the product is placed at a reference position, and a description (PRJ. MARK) of the piece of operation support information are registered. In Fig. 5, "arrow" shows an arrow, "circle" shows a circle, and "MSG" shows a character string.

In the operations of the operation supporting device 3, as shown in Fig. 3, the image acquiring unit 33 acquires the image captured by the image capturing device 1 first (in step ST1, image acquiring step). More specifically, the image acquiring unit 33 acquires the captured image which is acquired by capturing the work area where the operator performs operations of the product.

The position determining unit 34 then compares the captured image acquired by the image acquiring unit 33 and the feature images on the basis of the information registered in the feature image registering unit 31, and determines the position of the product in the captured image from a positional relationship among the parts recognized in the captured image (in step ST2, position determining step) . At this time, when the degree of matching between a specified part of the captured image and a feature image exceeds a preset threshold, the position determining unit 34 detects the specified part as a recognized part. In this comparison, for example, a technique, such as OpenCV (Open Source Computer Vision Library), can be used. Further, the above-mentioned threshold can be changed.

The projection position calculating unit 35 then calculates the projection position of the operation support information from both the position of the product in the captured image, the position being determined by the position determining unit 34, and the display position of the corresponding operation support information for the product, the display position being registered in the support information registering unit 32 (in step ST3, projection position calculating step).

The projection image generating unit 36 then generates a projection image in which the corresponding operation support information registered in the support information registering unit 32 is disposed at the projection position calculated by the projection position calculating unit 35 (in step ST4, projection image generating step).

The projection image outputting unit 37 then outputs the projection image generated by the projection image generating unit 36 to the projector 2 (in step ST5, projection image outputting step).

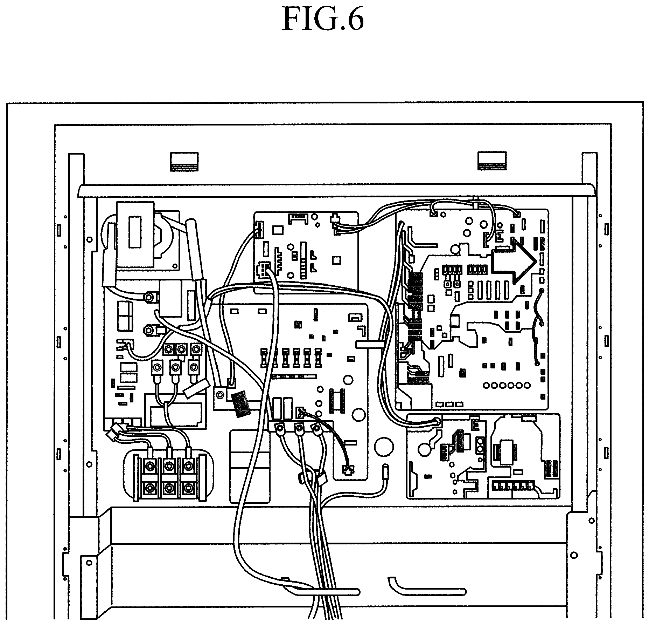

The projector 2 then receives the projection image from the operation supporting device 3, and projects this projection image onto the product. As a result, the operation support information can be projected directly onto the product. Conceptual drawings of the projection are shown in Figs. 6 to 8. After that, the operator has only to perform the operation in accordance with the operation support information projected onto the product, and can be prevented from mistakenly recognizing the description of the operation, forgetting the description of the operation, and performing the operation without checking the description of the operation, those mistaken operations being seen conventionally, thereby reducing operation errors. Further, according to the present invention, because the position of the product is determined by using the image captured by the image capturing device 1, the operation support information can be projected onto a correct position even if the installation position of the product differs every time the product is installed.

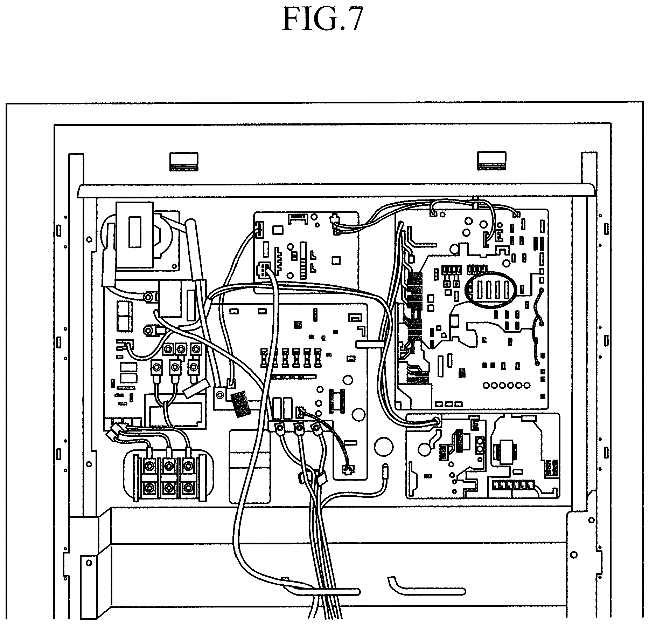

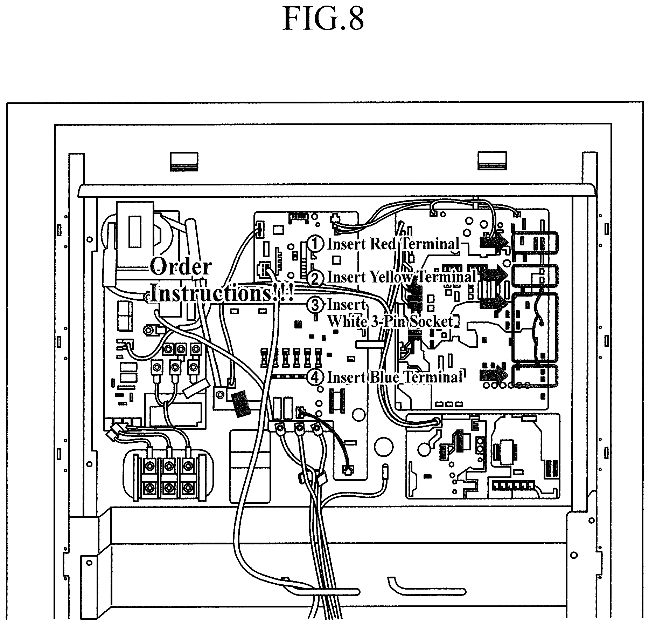

An example shown in Fig. 6 represents a case in which an arrow is projected onto the product so as to point to a part into which a connector is inserted. An example shown in Fig. 7 represents a case in which a circle is projected onto the product so as to enclose a part where connectors are inserted. An example shown in Fig. 8 represents a case in which, as to a plurality of processes of operation, circles enclosing parts to be operated, numerals showing the order of the processes of operation, and character strings showing descriptions of the processes of operation are projected onto the product.

As mentioned above, because the operation supporting system according to this Embodiment 1 is configured so as to compare a captured image and feature images registered in advance, thereby determining the position of a product in the captured image from a positional relationship among the feature images, to calculate the projection position of operation support information registered in advance from the position and the display position on the product of the operation support information, thereby generating a projection image, and to project the operation support information directly onto the product by using the projector 2, even in a case in which the position of the product for which the operator performs operations is changed, the operation supporting system can reduce operation errors as compared with those in conventional configurations. Further, when there are a plurality of parts to be operated, the operation supporting system can reduce operation errors even if the operator is unaccustomed to the operations.

Further, the operation supporting system according to the present invention can specify the product in real time by using the image captured by the image capturing device 1. Therefore, even if the installation position of the product changes in the course of the operations, the operation supporting system can follow the change and determine the position of the product.

Further, the configuration of Fig. 1 represents the case in which the single image capturing device 1 and the single projector 2 are provided. However, there is a case in which when the operator is located in front of the image capturing device 1 and the projector 2 because of the operator's movement or the like, the operation supporting system becomes unable to carry out detection of the product and projection of the operation support information onto the product. To solve this problem, two or more image capturing devices 1 and two or more projectors 2 can be provided, and, for example, can be installed on left and right sides, respectively. As a result, even if there are an image capturing device 1 and a projector 2 which are located behind the operator, the operation supporting system can carry out detection of the product and projection of the operation support information onto the product by using another image capturing device 1 and another projector 2.

Further, when a product is installed in the image capture area set by the image capturing device 1, the operation supporting system according to the present invention carries out detection of the product by using the position determining unit 34 and makes a preparation for instructions for the next operation. Therefore, the operation supporting system enables the operator to smoothly start operations.

Further, the case in which the above-mentioned position determining unit 34 makes a comparison between the entire captured image and the feature images is shown. However, the present embodiment is not limited to this example, and the operation supporting system can make a comparison between a pre-specified part in the captured image and the feature images, to detect the product. More specifically, at the site of operations, the installation position of the product can be grasped to some extent in advance. Therefore, instead of defining the entire captured image as the target for comparison, the operation supporting system defines only a part as the target for comparison. As a result, the operation supporting system can increase the speed of the comparison process performed by the position determining unit 34.

### Embodiment 2.

In Embodiment 2, a configuration for enabling an operator to verify that the operator has completed an operation in accordance with operation support information, by using a tablet terminal 4, and then shifting to projection of the next operation support information in response to the verification will be shown.

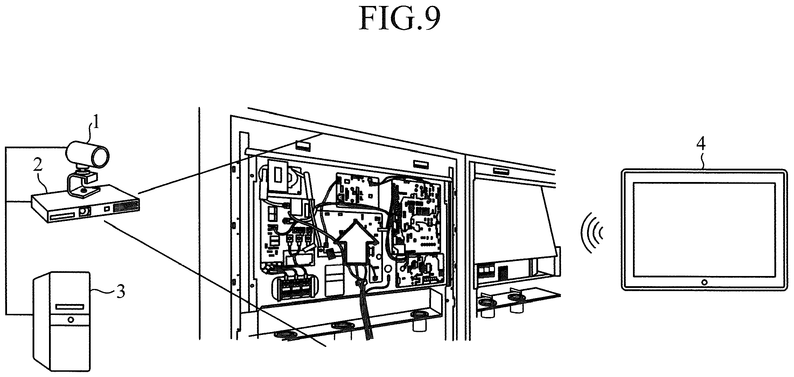

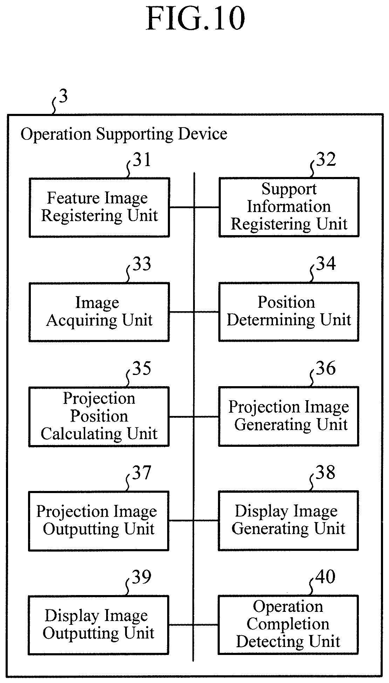

Fig. 9 is a diagram showing the configuration of an operation supporting system according to Embodiment 2 of the present invention is shown, and Fig. 10 is a diagram showing the configuration of an operation supporting device 3 according to Embodiment 2 of the present invention. The operation supporting system according to Embodiment 2 shown in Fig. 9 includes a tablet terminal 4, in addition to the components of the operation supporting system according to Embodiment 1 shown in Fig. 1. Further, an operation supporting device 3 according to Embodiment 2 shown in Fig. 10 includes a display image generating unit 38, a display image outputting unit 39 and an operation completion detecting unit 40, in addition to the components of the operation supporting device 3 according to Embodiment 1 shown in Fig. 2. The other components are the same as those according to Embodiment 1, and only a different portion will be explained with the same components being designated by the same reference numerals.

The tablet terminal 4 is operated by an operator. In synchronism with projection of operation support information by using a projector 2, this tablet terminal 4 receives a display image corresponding to the operation support information from the operation supporting device 3 and displays the display image. When then completing the operation corresponding to the operation support information, the operator notifies the completion of the operation to the operation supporting device 3 by tapping a predetermined part on the display image displayed on the tablet terminal 4. As this tablet terminal 4, a general-purpose terminal can be used.

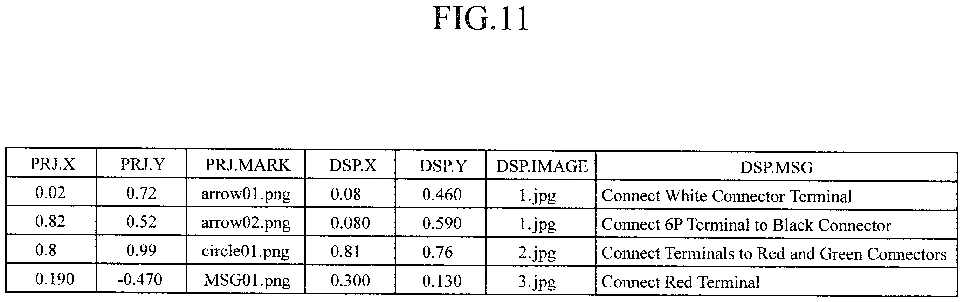

Further, a support information registering unit 32 of the operation supporting device 3 registers, for each product, information corresponding to each piece of operation support information (e.g., the information includes an entire image of the product, a part to be operated on the entire image, the part corresponding to the operation support information, and a description of the operation), in addition to registered information shown in Embodiment 1. In the support information registering unit 32, a table as shown in, for example, Fig. 11 is set in advance and held. In the table shown in Fig. 11, in addition to registered information shown in Fig. 5, X and Y coordinates (DSP.X, DSP.Y) on a tablet coordinate system, the coordinates showing each part to be operated in the entire image of the product displayed on the tablet terminal 4, the entire image (DSP.IMAGE) of the product, and the description of the operation (DSP.MSG) are registered.

The display image generating unit 38 generates a display image corresponding to the operation support information on the basis of the registered information stored in the support information registering unit 32.

The display image outputting unit 39 outputs the display image generated by the display image generating unit 38 to the tablet terminal 4 in synchronism with a projection image outputting unit 37.

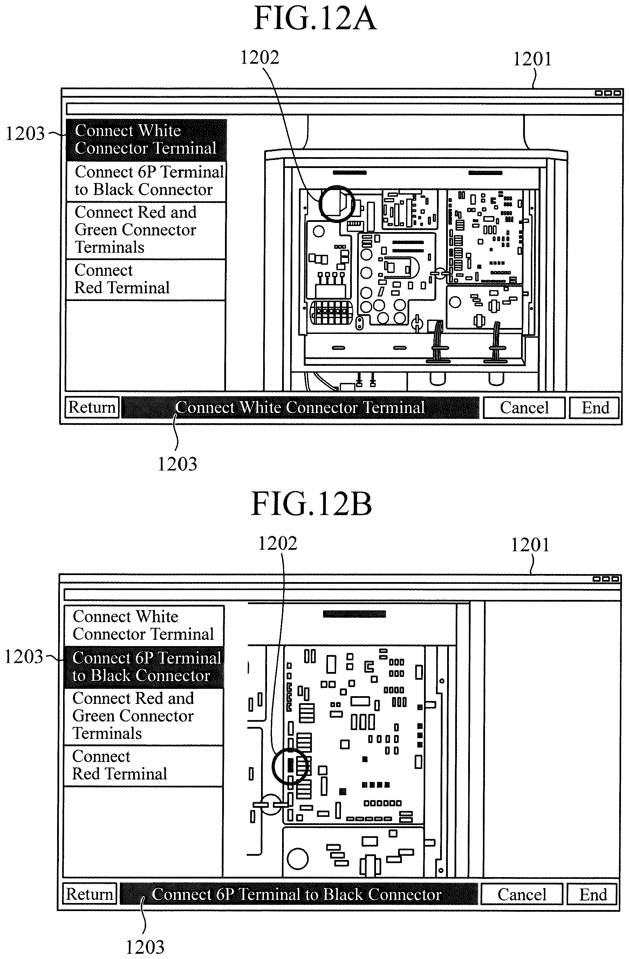

After the above-mentioned display image is displayed by the tablet terminal 4, the operation completion detecting unit 40 detects the completion of the operation corresponding to the operation support information from the operator's tapping operation. At this time, in an example shown in Fig. 12, which will be shown below, the operation completion detecting unit 40 compares the position tapped by the operator and each part to be operated in the entire image, the part being registered in the support information registering unit 32, to detect the completion of the operation associated with the corresponding operation support information.

The display image generating unit 38, the display image outputting unit 39, and the operation completion detecting unit 40 are implemented via program processing based on software with a CPU.

Further, when the operation completion detecting unit 38 detects the completion of the operation corresponding to the operation support information, a projection position calculating unit 35 calculates the projection position of the next operation support information.

According to Embodiment 2, when the operator performs an operation for the product, the operation supporting system projects the corresponding operation support information directly onto the product by using the projector 2, and also displays the display image corresponding to the operation support information on the tablet terminal 4. For example, in the example shown in Fig. 12, a display image including the entire image 1201 of the product, a mark 1202 showing a part to be operated, and information 1203 showing a description of the operation is displayed on the tablet terminal 4 on the basis of the registered information shown in Fig. 11.

After then performing the operation in accordance with the operation support information projected directly onto the product, the operator taps the mark 1202 shown in Fig. 12A in the display image displayed on the tablet terminal 4. The operation completion detecting unit 40 detects this tapping, and the operation supporting device 3 verifies that the operation in accordance with the operation support information has been completed. The projector 2 then projects the next operation support information, and the tablet terminal 4 shifts to the next screen (Fig. 12B).

As mentioned above, the operation supporting system according to this Embodiment 2 is configured so as to display a display image corresponding to operation support information on the tablet terminal 4 in synchronism with the projection of the operation support information onto the product by using the projector 2, and, after that, verify the completion of the operation from the operator's tapping operation and shift to projection of the next operation support information, so that there is provided an advantage of being able to add the verification function with the tablet terminal 4 and further reduce operation errors, in addition to the advantages provided by Embodiment 1.

It is assumed in the above-mentioned embodiment that the projection position calculating unit 35 calculates the projection position of operation support information in accordance with the order of processes of operation and projects the operation support information directly onto the product, and also causes the tablet terminal 4 to display a corresponding display image. When the operation support information is information for supporting an inspecting operation, the projection position calculating unit 35 can calculate the projection position of the operation support information in order different from the above-mentioned order of processes of operation. As a result, an inspection can be carried out in the order different from the order of processes of operation, such as that of an assembling operation, and an improvement in awareness of the inspection can be provided and a further reduction in operation errors can be expected.

In addition, while the present invention has been described in its preferred embodiments, it is to be understood that the scope of protection of the invention is defined by the appended claims.

### INDUSTRIAL APPLICABILITY

The operation supporting system according to the present invention can reduce operation errors as compared with conventional configurations even in a case in which the position of a product for which an operator performs operations is changed, and is suitable for use as an operation supporting system or the like that supports operations which an operator performs for a product.

### REFERENCE SIGNS LIST

1 image capturing device, 2 projector, 3 operation supporting device, 4 tablet terminal, 31 feature image registering unit, 32 support information registering unit, 33 image acquiring unit, 34 position determining unit, 35 projection position calculating unit, 36 projection image generating unit, 37 projection image outputting unit, 38 display image generating unit, 39 display image outputting unit, and 40 operation completion detecting unit.

## Claims

1. An operation supporting system that includes an image capturing device (1) for capturing an image of a work area where an operator performs an operation for a product, a projector (2) for receiving a projection image including at least one piece of operation support information for supporting said operation and projecting said projection image onto said work area, and an operation supporting device (3) for generating said projection image in accordance with the image captured by said image capturing device and outputting said projection image to said projector, wherein
said operation supporting device (3) comprises:
a feature image registering unit (31) for registering feature images of three or more parts of said product, with which said product is recognizable, together with a positional relationship among said parts;
a support information registering unit (32) for registering a display position of said operation support information for said product;
an image acquiring unit (33) for acquiring the image captured by said image capturing device;
a position determining unit (34) for comparing the captured image acquired by said image acquiring unit (33) and said feature images in accordance with the information registered in said feature image registering unit (31), and determining a position of said product in said captured image from a positional relationship among the parts recognized in said captured image;
a projection position calculating unit (35) for calculating a projection position of said operation support information from both the position of said product which is determined by said position determining unit (34) and the display position of said operation support information which is registered in said support information registering unit (32);
a projection image generating unit (36) for generating a projection image in which said operation support information is disposed at the projection position calculated by said projection position calculating unit (35); and
a projection image outputting unit (37) for outputting the projection image generated by said projection image generating unit (36) to said projector;
wherein two or more pieces of the operation support information are provided, and
said support information registering unit (32) comprises a tablet terminal operable by said operator, for registering pieces of information corresponding to said pieces of operation support information, and receiving and displaying a display image corresponding to each of said pieces of operation support information, and
said operation supporting device (3) comprises:
a display image generating unit (38) for generating said display image in accordance with information registered in said support information registering unit (32);
a display image outputting unit (39) for outputting the display image generated by said display image generating unit (38) to said tablet terminal in synchronism with said projection image outputting unit (37), and
an operation completion detecting unit (40) for detecting completion of an operation corresponding to one of said pieces of operation support information from a tap operation performed by said operator after said tablet terminal displays said display image, and,
wherein when said operation completion detecting unit (40) is configured to detect completion of an operation corresponding to one of said pieces of operation support information, said projection position calculating unit (35) is configured to calculate a projection position of a next one of said pieces of operation support information.

2. The operation supporting system according to claim 1, wherein said support information registering unit (32) is configured to register, as the pieces of information corresponding to said pieces of operation support information, an entire image of said product and parts to be operated on said entire image, the parts corresponding to said pieces of operation support information, and
said display image generating unit (38) is configured to generate, as said display image, an image including both the entire image of said product and a mark showing a part to be operated on said entire image, and
said operation completion detecting unit (40) is configured to compare a position tapped by said operator and the parts to be operated on said entire image which are registered into said support information registering unit (32), thereby detecting completion of an operation corresponding to one of said pieces of operation support information.

3. The operation supporting system according to claim 1, wherein said position determining unit (34) is configured to compare a pre-specified part of said captured image and said feature images.

4. The operation supporting system according to claim 1, wherein said projection position calculating unit (35) is configured to calculate projection positions of said pieces of operation support information in order of processes of operation.

5. The operation supporting system according to claim 1, wherein said pieces of operation support information are pieces of information for supporting an inspection work, and said projection position calculating unit (35) is configured to calculate projection positions of said pieces of operation support information in order different from order of processes of operation.

6. An operation supporting method for use in an operation supporting system that includes an image capturing device for capturing an image of a work area where an operator performs an operation for a product, a projector for receiving a projection image including operation support information for supporting said operation and projecting said projection image onto said work area, and an operation supporting device (3) for generating said projection image in accordance with the image captured by said image capturing device and outputting said projection image to said projector, said operation supporting method comprises the steps of:
in a feature image registering unit (31), registering feature images of three or more parts of said product, with which said product is recognizable, together with a positional relationship among said parts;
in a support information registering unit (32), registering a display position of said operation support information for said product;
in an image acquiring unit (33), acquiring the image captured by said image capturing device;
in a position determining unit (34), comparing the captured image acquired by said image acquiring unit (33) and said feature images in accordance with the information registered in said feature image registering unit (31), and determining a position of said product in said captured image from a positional relationship among the parts recognized in said captured image;
in a projection position calculating unit (35), calculating a projection position of said operation support information from both the position of said product which is determined by said position determining unit (34) and the display position of said operation support information which is registered in said support information registering unit (32);
in a projection image generating unit (36), generating a projection image in which said operation support information is disposed at the projection position calculated by said projection position calculating unit (35); and
in a projection image outputting unit (37), outputting the projection image generated by said projection image generating unit (36) to said projector;
wherein two or more pieces of the operation support information are provided, and
said tablet terminal is operated by said operator, for registering pieces of information corresponding to said pieces of operation support information, and receiving and displaying a display image corresponding to each of said pieces of operation support information, and
a display image generating unit (38) comprised in said operation supporting device (3) generating said display image in accordance with information registered in said support information registering unit (32);
a display image outputting unit (39) comprised in said operation supporting device (3) outputting the display image generated by said display image generating unit (38) to said tablet terminal in synchronism with said projection image outputting unit (37), and
an operation completion detecting unit (40) comprised in said operation supporting device detecting completion of an operation corresponding to one of said pieces of operation support information from a tap operation performed by said operator after said tablet terminal displays said display image,
wherein when said operation completion detecting unit (40) detects completion of an operation corresponding to one of said pieces of operation support information, said projection position calculating unit (35) calculates a projection position of a next one of said pieces of operation support information.

## Patentansprüche

1. Betriebsunterstützendes System, das eine Bildaufnahmevorrichtung (1) zum Aufnehmen eines Bildes eines Arbeitsbereichs, wo ein Bediener einen Betrieb für ein Produkt durchführt, einen Projektor (2) zum Empfangen eines Projektionsbildes, das mindestens eine Betriebsunterstützungsinformationsangabe zum Unterstützen des Betriebs enthält, und Projizieren des Projektionsbildes auf den Arbeitsbereich, und eine betriebsunterstützende Vorrichtung (3) zum Generieren des Projektionsbildes gemäß dem Bild, das durch die Bildaufnahmevorrichtung aufgenommen wird, und Ausgeben des Projektionsbildes an den Projektor enthält, wobei
die betriebsunterstützende Vorrichtung (3) umfasst:
eine Merkmalbildregistrierungseinheit (31) zum Registrieren von Merkmalbildern von drei oder mehr Teilen des Produkts, mit welchen das Produkt erkennbar ist, gemeinsam mit einem Positionsverhältnis unter den Teilen;
eine Unterstützungsinformationsregistrierungseinheit (32) zum Registrieren einer Anzeigeposition der Betriebsunterstützungsinformationen für das Produkt;
eine Bildgewinnungseinheit (33) zum Gewinnen des Bildes, das durch die Bildaufnahmevorrichtung aufgenommen wird;
eine Positionsbestimmungseinheit (34) zum Vergleichen des aufgenommenen Bildes, das durch die Bildgewinnungseinheit (33) gewonnen wurde, und der Merkmalbilder gemäß den Informationen, die in der Merkmalbildregistrierungseinheit (31) registriert sind, und Bestimmen einer Position des Produkts in dem aufgenommenen Bild aus einem Positionsverhältnis unter den Teilen, die in dem aufgenommenen Bild erkannt werden;
eine Projektionspositionsberechnungseinheit (35) zum Berechnen einer Projektionsposition der Betriebsunterstützungsinformationen aus sowohl der Position des Produkts, die durch die Positionsbestimmungseinheit (34) bestimmt wird, als auch der Anzeigeposition der Betriebsunterstützungsinformationen, die in der Unterstützungsinformationsregistrierungseinheit (32) registriert sind;
eine Projektionsbildgenerierungseinheit (36) zum Generieren eines Projektionsbildes, in dem die Betriebsunterstützungsinformationen an der Projektionsposition angeordnet sind, die durch die Projektionspositionsberechnungseinheit (35) berechnet wird; und
eine Projektionsbildausgabeeinheit (37) zum Ausgeben des Projektionsbildes, das durch die Projektionsbildgenerierungseinheit (36) generiert wird, an den Projektor;
wobei zwei oder mehr der Betriebsunterstützungsinformationsangaben bereitgestellt werden und
die Unterstützungsinformationsregistrierungseinheit (32) ein Tablet-Endgerät umfasst, das durch den Bediener bedienbar ist, um Informationsangaben zu registrieren, die den Betriebsunterstützungsinformationsangaben entsprechen, und ein Anzeigebild zu empfangen und anzuzeigen, das jeder der Betriebsunterstützungsinformationsangaben entspricht, und
die betriebsunterstützende Vorrichtung (3) umfasst:
eine Anzeigebildgenerierungseinheit (38) zum Generieren des Anzeigebilds gemäß Informationen, die in der Unterstützungsinformationsregistrierungseinheit (32) registriert sind;
eine Anzeigebildausgabeeinheit (39) zum Ausgeben des Anzeigebilds, das durch die Anzeigebildgenerierungseinheit (38) generiert wird, an das Tablet-Endgerät synchron mit der Projektionsbildausgabeeinheit (37), und
eine Betriebsbeendigungserfassungseinheit (40) zum Erfassen einer Beendigung eines Betriebs entsprechend einer der Betriebsunterstützungsinformationsangaben aus einem Tippbetrieb, der durch den Bediener durchgeführt wird, sobald das Tablet-Endgerät das Anzeigebild anzeigt, und
wobei, wenn die Betriebsbeendigungserfassungseinheit (40) konfiguriert ist, eine Beendigung eines Betriebs entsprechend einer der Betriebsunterstützungsinformationsangaben zu erfassen, die Projektionspositionsberechnungseinheit (35) konfiguriert ist, eine Projektionsposition einer nächsten der Betriebsunterstützungsinformationsangaben zu berechnen.

2. Betriebsunterstützendes System nach Anspruch 1, wobei die Unterstützungsinformationsregistrierungseinheit (32) konfiguriert ist, als Informationsangaben, die den Betriebsunterstützungsinformationsangaben entsprechen, ein gesamtes Bild des Produkts und Teile, die auf dem gesamten Bild zu bearbeiten sind, zu registrieren, wobei die Teile den Betriebsunterstützungsinformationsangaben entsprechen, und
die Anzeigebildgenerierungseinheit (38) konfiguriert ist, als das Anzeigebild ein Bild zu generieren, das sowohl das gesamte Bild des Produkts als auch eine Markierung enthält, die einen Teil anzeigt, der auf dem gesamten Bild zu bearbeiten ist, und
die Betriebsbeendigungserfassungseinheit (40) konfiguriert ist, eine Position, auf die der Bediener tippt, und die Teile, die auf dem gesamten Bild zu bearbeiten sind, die in der Unterstützungsinformationsregistrierungseinheit (32) registriert sind, zu vergleichen, wodurch eine Beendigung eines Betriebs entsprechend einer der Betriebsunterstützungsinformationsangaben erfasst wird.

3. Betriebsunterstützendes System nach Anspruch 1, wobei die Positionsbestimmungseinheit (34) konfiguriert ist, einen vorspezifizierten Teil des aufgenommenen Bildes und die Merkmalbilder zu vergleichen.

4. Betriebsunterstützendes System nach Anspruch 1, wobei die Projektionspositionsberechnungseinheit (35) konfiguriert ist, Projektionspositionen der Betriebsunterstützungsinformationsangaben in der Reihenfolge von Betriebsprozessen zu berechnen.

5. Betriebsunterstützendes System nach Anspruch 1, wobei die Betriebsunterstützungsinformationsangaben Informationsangaben zum Unterstützen einer Überprüfungsarbeit sind und die Projektionspositionsberechnungseinheit (35) konfiguriert ist, Projektionspositionen der Betriebsunterstützungsinformationsangaben in einer anderen Reihenfolge als der Reihenfolge von Betriebsprozessen zu berechnen.

6. Betriebsunterstützendes Verfahren zur Verwendung in einem betriebsunterstützenden System, das eine Bildaufnahmevorrichtung zum Aufnehmen eines Bildes eines Arbeitsbereichs, wo ein Bediener einen Betrieb für ein Produkt durchführt, einen Projektor zum Empfangen eines Projektionsbildes, das Betriebsunterstützungsinformationen zum Unterstützen des Betriebs enthält, und Projizieren des Projektionsbildes auf den Arbeitsbereich, und eine betriebsunterstützende Vorrichtung (3) zum Generieren des Projektionsbildes gemäß dem Bild, das durch die Bildaufnahmevorrichtung aufgenommen wird, und Ausgeben des Projektionsbildes an den Projektor enthält, wobei das betriebsunterstützende Verfahren die Schritte umfasst:
in einer Merkmalbildregistrierungseinheit (31), Registrieren von Merkmalbildern von drei oder mehr Teilen des Produkts, mit welchen das Produkt erkennbar ist, gemeinsam mit einem Positionsverhältnis unter den Teilen;
in einer Unterstützungsinformationsregistrierungseinheit (32), Registrieren einer Anzeigeposition der Betriebsunterstützungsinformationen für das Produkt;
in einer Bildgewinnungseinheit (33), Gewinnen des Bildes, das durch die Bildaufnahmevorrichtung aufgenommen wird;
in einer Positionsbestimmungseinheit (34), Vergleichen des aufgenommenen Bildes, das durch die Bildgewinnungseinheit (33) gewonnen wurde, und der Merkmalbilder gemäß den Informationen, die in der Merkmalbildregistrierungseinheit (31) registriert sind, und Bestimmen einer Position des Produkts in dem aufgenommenen Bild aus einem Positionsverhältnis unter den Teilen, die in dem aufgenommenen Bild erkannt werden;
in einer Projektionspositionsberechnungseinheit (35), Berechnen einer Projektionsposition der Betriebsunterstützungsinformationen aus sowohl der Position des Produkts, die durch die Positionsbestimmungseinheit (34) bestimmt wird, als auch der Anzeigeposition der Betriebsunterstützungsinformationen, die in der Unterstützungsinformationsregistrierungseinheit (32) registriert sind;
in einer Projektionsbildgenerierungseinheit (36), Generieren eines Projektionsbildes, in dem die Betriebsunterstützungsinformationen an der Projektionsposition angeordnet sind, die durch die Projektionspositionsberechnungseinheit (35) berechnet wird; und
in einer Projektionsbildausgabeeinheit (37), Ausgeben des Projektionsbildes, das durch die Projektionsbildgenerierungseinheit (36) generiert wird, an den Projektor;
wobei zwei oder mehr der Betriebsunterstützungsinformationsangaben bereitgestellt werden und
das Tablet-Endgerät durch den Bediener bedient wird, um Informationsangaben zu registrieren, die den Betriebsunterstützungsinformationsangaben entsprechen, und ein Anzeigebild zu empfangen und anzuzeigen, das jeder der Betriebsunterstützungsinformationsangaben entspricht, und
eine Anzeigebildgenerierungseinheit (38), die in der betriebsunterstützenden Vorrichtung (3) umfasst ist, das Anzeigebild gemäß Informationen generiert, die in der Unterstützungsinformationsregistrierungseinheit (32) registriert sind;
eine Anzeigebildausgabeeinheit (39), die in der betriebsunterstützenden Vorrichtung (3) umfasst ist, das Anzeigebild, das durch die Anzeigebildgenerierungseinheit (38) generiert wird, an das Tablet-Endgerät synchron mit der Projektionsbildausgabeeinheit (37) ausgibt, und
eine Betriebsbeendigungserfassungseinheit (40), die in der betriebsunterstützenden Vorrichtung umfasst ist, eine Beendigung eines Betriebs entsprechend einer der Betriebsunterstützungsinformationsangaben aus einem Tippbetrieb erfasst, der durch den Bediener durchgeführt wird, sobald das Tablet-Endgerät das Anzeigebild anzeigt,
wobei, wenn die Betriebsbeendigungserfassungseinheit (40) eine Beendigung eines Betriebs entsprechend einer der Betriebsunterstützungsinformationsangaben erfasst, die Projektionspositionsberechnungseinheit (35) eine Projektionsposition einer nächsten der Betriebsunterstützungsinformationsangaben berechnet.

## Revendications

1. Système d'assistance à l'exploitation qui inclut un dispositif de capture d'images (1) pour capturer une image d'une zone de travail où un opérateur effectue une opération pour un produit, un projecteur (2) pour recevoir une image de projection incluant au moins un élément d'information d'assistance à l'exploitation pour aider à ladite opération et projeter ladite image de projection sur ladite zone de travail, et un dispositif d'assistance à l'exploitation (3) pour générer ladite image de projection conformément à l'image capturée par ledit dispositif de capture d'images et transmettre ladite image de projection audit projecteur, dans lequel
ledit dispositif d'assistance à l'exploitation (3) comprend :
une unité d'enregistrement d'images caractéristiques (31) pour enregistrer des images caractéristiques de trois parties ou plus dudit produit, qui permettent de reconnaître ledit produit, conjointement avec une relation de position entre lesdites parties ;
une unité d'enregistrement d'informations d'assistance (32) pour enregistrer une position d'affichage desdites informations d'assistance à l'exploitation pour ledit produit ;
une unité d'acquisition d'images (33) pour acquérir l'image capturée par ledit dispositif de capture d'images ;
une unité de détermination de position (34) pour comparer l'image capturée acquise par ladite unité d'acquisition d'images (33) et lesdites images caractéristiques conformément aux informations enregistrées dans ladite unité d'enregistrement d'images caractéristiques (31), et déterminer une position dudit produit dans ladite image capturée d'après une relation de position entre les parties reconnues dans ladite image capturée ;
une unité de calcul de position de projection (35) pour calculer une position de projection desdites informations d'assistance à l'exploitation à la fois d'après la position dudit produit qui a été déterminée par ladite unité de détermination de position (34) et d'après la position d'affichage desdites informations d'assistance à l'exploitation qui sont enregistrées dans ladite unité d'enregistrement d'informations d'assistance (32) ;
une unité de génération d'images de projection (36) pour générer une image de projection dans laquelle lesdites informations d'assistance à l'exploitation sont disposées à la position de projection calculée par ladite unité de calcul de position de projection (35) ; et
une unité de transmission d'images de projection (37) pour transmettre l'image de projection générée par ladite unité de génération d'images de projection (36) audit projecteur ;
dans lequel deux éléments ou plus des informations d'assistance à l'exploitation sont fournis, et
ladite unité d'enregistrement d'informations d'assistance (32) comprend un terminal de type tablette pouvant être utilisé par ledit opérateur, pour enregistrer des éléments d'information correspondant auxdits éléments d'information d'assistance à l'exploitation, et recevoir et afficher une image d'affichage correspondant à chacun desdits éléments d'information d'assistance à l'exploitation, et
ledit dispositif d'assistance à l'exploitation (3) comprend :
une unité de génération d'images d'affichage (38) pour générer ladite image d'affichage conformément aux informations enregistrées dans ladite unité d'enregistrement d'informations d'assistance (32) ;
une unité de transmission d'images d'affichage (39) pour transmettre l'image d'affichage générée par ladite unité de génération d'images d'affichage (38) audit terminal de type tablette de façon synchrone avec ladite unité de transmission d'images de projection (37), et
une unité de détection d'achèvement d'opération (40) pour détecter l'achèvement d'une opération correspondant à l'un desdits éléments d'information d'assistance à l'exploitation d'après une opération de tapotement effectuée par ledit opérateur après que ledit terminal de type tablette a affiché ladite image d'affichage, et,
dans lequel lorsque ladite unité de détection d'achèvement d'opération (40) est configurée pour détecter l'achèvement d'une opération correspondant à l'un desdits éléments d'information d'assistance à l'exploitation, ladite unité de calcul de position de projection (35) est configurée pour calculer une position de projection d'un élément suivant desdits éléments d'information d'assistance à l'exploitation.

2. Système d'assistance à l'exploitation selon la revendication 1, dans lequel ladite unité d'enregistrement d'informations d'assistance (32) est configurée pour enregistrer, en tant qu'éléments d'information correspondant auxdits éléments d'information d'assistance à l'exploitation, une image complète dudit produit et de parties à soumettre à une opération sur ladite image complète, les parties correspondant auxdits éléments d'information d'assistance à l'exploitation, et
ladite unité de génération d'images d'affichage (38) est configurée pour générer, en tant que ladite image d'affichage, une image comportant à la fois l'image complète dudit produit et un repère montrant une partie à soumettre à une opération sur ladite image complète, et
ladite unité de détection d'achèvement d'opération (40) est configurée pour comparer une position tapotée par ledit opérateur et les parties à soumettre à une opération sur ladite image complète qui sont enregistrées dans ladite unité d'enregistrement d'informations d'assistance (32), détectant ainsi l'achèvement d'une opération correspondant à l'un desdits éléments d'information d'assistance à l'exploitation.

3. Système d'assistance à l'exploitation selon la revendication 1, dans lequel ladite unité de détermination de position (34) est configurée pour comparer une partie préalablement spécifiée de ladite image capturée et desdites images caractéristiques.

4. Système d'assistance à l'exploitation selon la revendication 1, dans lequel ladite unité de calcul de position de projection (35) est configurée pour calculer des positions de projection desdits éléments d'information d'assistance à l'exploitation dans l'ordre des processus d'exploitation.

5. Système d'assistance à l'exploitation selon la revendication 1, dans lequel lesdits éléments d'information d'assistance à l'exploitation sont des éléments d'information pour aider à un travail d'inspection, et ladite unité de calcul de position de projection (35) est configurée pour calculer des positions de projection desdits éléments d'information d'assistance à l'exploitation dans un ordre différent de l'ordre des processus d'exploitation.

6. Procédé d'assistance à l'exploitation pour utilisation dans un système d'assistance à l'exploitation qui inclut un dispositif de capture d'images pour capturer une image d'une zone de travail où un opérateur effectue une opération pour un produit, un projecteur pour recevoir une image de projection incluant des informations d'assistance à l'exploitation pour aider à ladite opération et projeter ladite image de projection sur ladite zone de travail, et un dispositif d'assistance à l'exploitation (3) pour générer ladite image de projection conformément à l'image capturée par ledit dispositif de capture d'images et transmettre ladite image de projection audit projecteur, ledit procédé d'assistance à l'exploitation comprend les étapes suivantes :
dans une unité d'enregistrement d'images caractéristiques (31), l'enregistrement d'images caractéristiques de trois parties ou plus dudit produit, qui permettent de reconnaître ledit produit, conjointement avec une relation de position entre lesdites parties ;
dans une unité d'enregistrement d'informations d'assistance (32), l'enregistrement d'une position d'affichage desdites informations d'assistance à l'exploitation pour ledit produit ;
dans une unité d'acquisition d'images (33), l'acquisition de l'image capturée par ledit dispositif de capture d'images ;
dans une unité de détermination de position (34), la comparaison de l'image capturée acquise par ladite unité d'acquisition d'images (33) et desdites images caractéristiques conformément aux informations enregistrées dans ladite unité d'enregistrement d'images caractéristiques (31), et la détermination d'une position dudit produit dans ladite image capturée d'après une relation de position entre les parties reconnues dans ladite image capturée ;
dans une unité de calcul de position de projection (35), le calcul d'une position de projection desdites informations d'assistance à l'exploitation à la fois d'après la position dudit produit qui a été déterminée par ladite unité de détermination de position (34) et d'après la position d'affichage desdites informations d'assistance à l'exploitation qui sont enregistrées dans ladite unité d'enregistrement d'informations d'assistance (32) ;
dans une unité de génération d'images de projection (36), la génération d'une image de projection dans laquelle lesdites informations d'assistance à l'exploitation sont disposées à la position de projection calculée par ladite unité de calcul de position de projection (35) ; et
dans une unité de transmission d'images de projection (37), la transmission de l'image de projection générée par ladite unité de génération d'images de projection (36) audit projecteur ;
dans lequel deux éléments ou plus des informations d'assistance à l'exploitation sont fournis, et
ledit terminal de type tablette est utilisé par ledit opérateur, pour enregistrer des éléments d'information correspondant auxdits éléments d'information d'assistance à l'exploitation, et recevoir et afficher une image d'affichage correspondant à chacun desdits éléments d'information d'assistance à l'exploitation, et
une unité de génération d'images d'affichage (38) comprise dans ledit dispositif d'assistance à l'exploitation (3) générant ladite image d'affichage conformément aux informations enregistrées dans ladite unité d'enregistrement d'informations d'assistance (32) ;
une unité de transmission d'images d'affichage (39) comprise dans ledit dispositif d'assistance à l'exploitation (3) transmettant l'image d'affichage générée par ladite unité de génération d'images d'affichage (38) audit terminal de type tablette de façon synchrone avec ladite unité de transmission d'images de projection (37), et
une unité de détection d'achèvement d'opération (40) comprise dans ledit dispositif d'assistance à l'exploitation détectant l'achèvement d'une opération correspondant à l'un desdits éléments d'information d'assistance à l'exploitation d'après une opération de tapotement effectuée par ledit opérateur après que ledit terminal de type tablette a affiché ladite image d'affichage,
dans lequel lorsque ladite unité de détection d'achèvement d'opération (40) détecte l'achèvement d'une opération correspondant à l'un desdits éléments d'information d'assistance à l'exploitation, ladite unité de calcul de position de projection (35) calcule une position de projection d'un élément suivant desdits éléments d'information d'assistance à l'exploitation.
